# EUROPEAN PATENT APPLICATION

(11) **EP 3 499 433 A1**
(43) Date of publication of application: **19.06.2019**
(21) Application number: 18196789.4
(22) Date of filing: 26.09.2018
(51) Int. Cl.: G06Q 10/00, G06N 7/00

(54) **MULTI-STEP TIME SERIES FORECASTING WITH RESIDUAL LEARNING**

(30) Priority: 14.12.2017 US 201715841662
(71) Applicant: Business Objects Software Limited, Dublin 1 (IE)
(72) Inventor: WU, Ying, 69190 Walldorf (DE); PALLATH, PAUL, 69190 Walldorf (DE); O'HARA, Paul, 69190 Walldorf (DE)
(74) Representative: Müller-Boré & Partner Patentanwälte PartG mbB

(57) **Abstract**

A method includes receiving training data including sequential data, determining a plurality of future time points, generating a first prediction by applying a first forecasting algorithm to the training data, generating a second prediction by applying a second forecasting algorithm to the training data, extracting predicted values from the first prediction and the second prediction that corresponds to a future time point of the plurality of future time points, applying a regression model in sequence on each of the plurality of future time points to generate a final predicted value of each of the plurality of future time points, and outputting the final predicted values of the plurality of future time points.

## Description

### BACKGROUND

A time series is a sequence of observations taken sequentially in time. Time series observations are encountered in many domains such as business, economics, industry, engineering, and science (*e*.*g*., weather forecasting, energy consumption forecasting, stock market prediction, etc.). Time series forecasting algorithms aim to capture information such as periodicity, seasonality, and trend from time series and use this knowledge to generate forecasts for future time frames (*e*.*g*., future values of that series).

Typical approaches to time series forecasting generally focus on short-term prediction or prediction in a single step. However, many use cases require long-term, medium-term, or multi-step time series forecasting. Moreover, classic time series algorithms typically can only handle one time series without considering any extra information. While they may at times provide sufficient prediction for a short term time period (*e*.*g*., one day in the future), when the prediction time interval is made longer, inaccuracies result.

### BRIEF DESCRIPTION OF THE DRAWINGS

Features and advantages of the example embodiments, and the manner in which the same are accomplished, will become more readily apparent with reference to the following detailed description taken in conjunction with the accompanying drawings.
FIG. 1 is a block diagram of a system according to some embodiments.
FIG. 2 is a block diagram in which an illustrative subcomponent of the system of FIG. 1 is shown.
FIG. 3 is a flow diagram illustrating a stabilizing mechanism according to some embodiments.
FIGS. 4 and 5 are flow diagrams illustrating multi-step time series forecasting using a regression model according to some embodiments.
FIGS. 6 and 7 are flow diagrams illustrating multi-step time series forecasting using a time series forecasting model according to some embodiments.
FIGS. 8 and 9 are flow diagrams illustrating multi-step time series forecasting using a stacked regression model according to some embodiments.
FIGS. 10 and 11 are flow diagrams illustrating combining multiple forecasting branches using a joiner according to some embodiments.
FIG. 12 is a block diagram of an apparatus according to some embodiments.

Throughout the drawings and the detailed description, unless otherwise described, the same drawing reference numerals will be understood to refer to the same elements, features, and structures. The relative size and depiction of these elements may be exaggerated or adjusted for clarity, illustration, and/or convenience.

### DETAILED DESCRIPTION

In the following description, specific details are set forth in order to provide a thorough understanding of the various example embodiments. It should be appreciated that various modifications to the embodiments will be readily apparent to those skilled in the art, and the generic principles defined herein may be applied to other embodiments and applications without departing from the spirit and scope of the disclosure. Moreover, in the following description, numerous details are set forth for the purpose of explanation. However, one of ordinary skill in the art should understand that embodiments may be practiced without the use of these specific details. In other instances, well-known structures and processes are not shown or described in order not to obscure the description with unnecessary detail. Thus, the present disclosure is not intended to be limited to the embodiments shown, but is to be accorded the widest scope consistent with the principles and features disclosed herein.

The disclosed embodiments relate to multi-step time series forecasting, and more specifically, to multi-step time series forecasting with residual learning. A multi-step time series forecasting solution is provided that can perform multiple time series algorithms to automatically select the most suitable algorithms for different datasets. Furthermore, a stabilizing mechanism is provided to improve accuracy. The solution affords forecasting capabilities for longer term horizons with higher confidence.

For the purposes of this disclosure, "multi-step" time series forecasting refers to predicting multiple time steps into the future, as opposed to a one-step forecast where only one time step is to be predicted. Forecasting methods serve to predict future values of a time series based on historical trends. Being able to gauge expected outcomes for a given time period is essential in many fields that involve managing, planning, and finances.

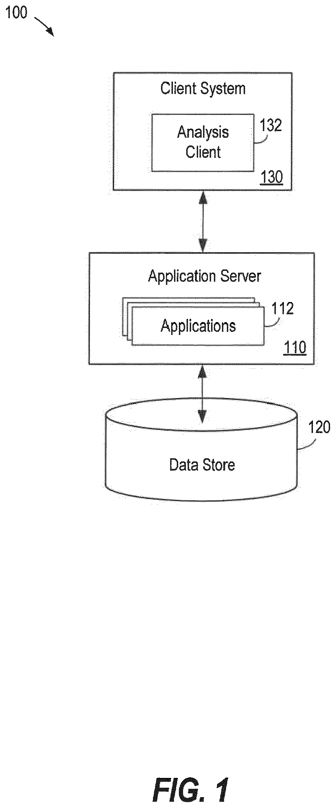

FIG. 1 is a block diagram of a system 100 according to some embodiments. FIG. 1 represents a logical architecture for describing processes according to some embodiments, and actual implementations may include more or different components arranged in other manners.

System 100 includes application server 110 to provide data of data store 120 to client system 130. For example, application server 110 may execute one of applications 112 to receive a request for analysis from analysis client 132 executed by client system 130, to query data store 120 for data required by the analysis, receive the data from data store 120, perform the analysis on the data, and return results of the analysis to client system 130.

Data store 120 may comprise any one or more systems to store prediction data. The data stored in data store 120 may be received from disparate hardware and software systems, some of which are not interoperational with one another. The systems may comprise a back-end data environment employed in a business or industrial context. The data may be pushed to data store 120 and/or provided in response to queries received therefrom.

Data store 120 may comprise a relational database, a multi-dimensional database, an eXtensible Markup Language (XML) document, and/or any other data storage system storing structured and/or unstructured data. The data of data store 120 may be distributed among several relational databases, dimensional databases, and/or other data sources. Embodiments are not limited to any number or types of data sources.

Data store 120 may implement an "in-memory" database, in which volatile (*e*.*g*., non-disk-based) storage (*e*.*g*., Random Access Memory) is used both for cache memory and for storing data during operation, and persistent storage (*e*.*g*., one or more fixed disks) is used for offline persistency of data and for maintenance of database snapshots. Alternatively, volatile storage may be used as cache memory for storing recently-used database data, while persistent storage stores data. In some embodiments, the data comprises one or more of conventional tabular data, row-based data stored in row format, column-based data stored in columnar format, and object-based data.

Client system 130 may comprise one or more devices executing program code of a software application for presenting user interfaces to allow interaction with applications 112 of application server 110. Client system 130 may comprise a desktop computer, a laptop computer, a personal digital assistant, a tablet PC, and a smartphone, but is not limited thereto.

Analysis client 132 may comprise program code of a spreadsheet application, a spreadsheet application with a plug-in allowing communication (*e*.*g*., via Web Services) with application server 110, a rich client application (*e*.*g*., a Business Intelligence tool), an applet in a Web browser, or any other application to perform the processes attributed thereto herein.

Although system 100 has been described as a distributed system, system 100 may be implemented in some embodiments by a single computing device. For example, both client system 130 and application server 110 may be embodied by an application executed by a processor of a desktop computer, and data store 120 may be embodied by a fixed disk drive within the desktop computer.

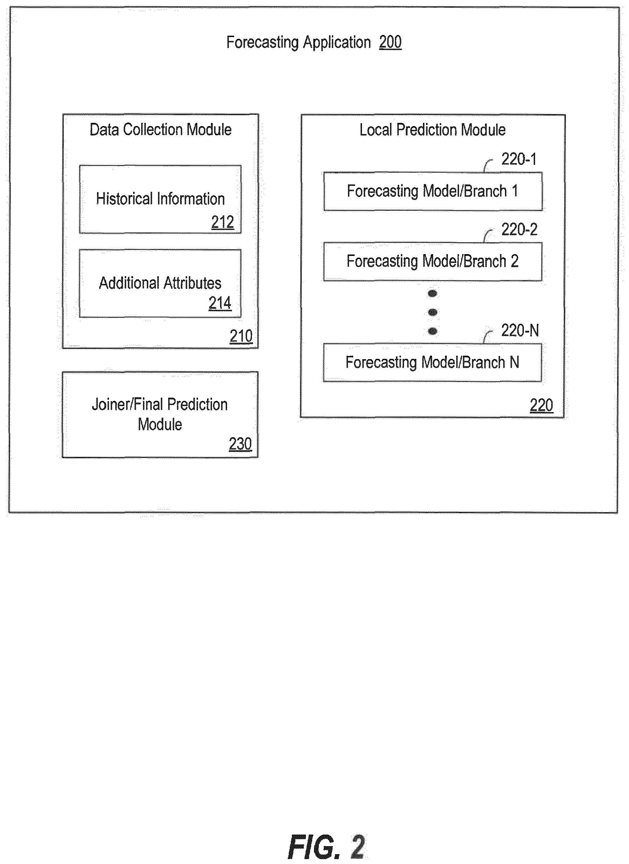

FIG. 2 is a block diagram illustrating an example embodiment of a forecasting application 200 provided as part of applications 112. The forecasting application 200 includes a data collection module 210, local prediction module 220, and joiner/final prediction module 230.

The forecasting solution using forecasting application 220 may take advantage of the strengths of different time series forecasting algorithms to improve forecasting accuracy. For example, some forecasting branches may be better at extracting trends or periodic features; some forecasting branches may only use time series as input while other forecasting branches may take extra information into account. Each forecasting branch 220-1, 220-2, ... 220-N produces its own forecast (*e*.*g*., prediction). In some embodiments, the output from each forecasting branch is represented as a matrix of numeric values (*e*.*g*., multiple columns of data), where each column is a vector of numeric values that corresponds to one future time point. Each value in the columns corresponds to a prediction for one time series record in the corresponding future time point.

Joiner 230 is a mechanism that combines the forecasted results (*e*.*g*., outputs) from local prediction module 220. In an example embodiment, joiner 230 joins the forecasted results from forecasting models/branches 220-1, 220-2, ... 220-N. Each forecasting branch 220-1, 220-2, ... 220-N employs a single time series forecasting algorithm where the time series forecasting model is regarded as a local predictor to produce a local prediction. In some embodiments, the multiple forecasting branches may be performed in parallel. The time series forecasting algorithms from each of forecasting branches 220-1, 220-2, ... 220-N are applied to the same set of data, for example, training data/historical information 212 collected from occurrences in the past. In some embodiments, additional attributes 214 are also used as input data.

Joiner/final prediction module 230 combines the outputs from the individual forecasting branches 220-1, 220-2, ... 220-N to produce a final prediction with enhanced accuracy and reliability. In some embodiments, the final prediction is represented as a vector of numeric values (*e*.*g*., a single column of data), where each value corresponds to one time point in the future.

Advantageously, forecasting application 200 provides a flexible framework for handling multi-step time series forecasting to which a forecasting branch may be flexibly added, changed, or removed without affecting the rest of the system. Also advantageously, different information may be flexibly included in different forecasting branches 220-1, 220-2, ... 220-N.

In the example embodiments described herein, three forecasting branches are considered.

In the first forecasting branch 220-1, regression algorithms are used to fulfill multi-step time series forecasting. Time series values of past time points and extra information are used as input variables in a regression model. For each future time point, an individual regression model is built. Thus, if there are M future time points to predict, M regression models are built with the same input variables but with different target variables. Because the trained models for each future time point are independent from each other, the models may be built at the same time and executed in parallel.

In the second forecasting branch 220-2, a time series forecasting algorithm is performed on each time series. Thus, if there are N time series in the dataset, N time series models are built, each of which will predict the time series values of the next M future time points individually. Time series predictions on multiple time points are obtained at once based on the trained time series model.

In the third forecasting branch, 220-N, stacked regression algorithms are used to fulfill multi-step time series forecasting. One regression model is built for each future time point in a rolling manner. That is, given one future time point, both the time series values of past time points and predictions until the current future time point are used to predict the following future time point. One regression will use predictions of its previous regression models in a rolling manner. This means given one future time point, both the time series values of past time points and predictions until the current future time point are used to predict the following future time point.

It is contemplated that forecasting application 200 may apply other forecasting models or algorithms and embodiments are therefore not limited to any specific model or algorithm.

### Forecasting Branch With Local Prediction And Residual Learning

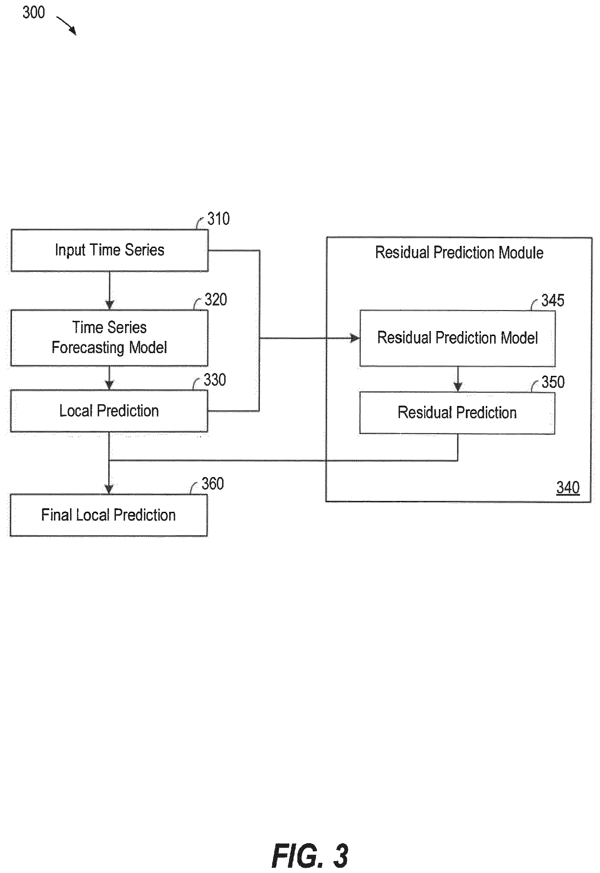

FIG. 3 is a diagram illustrating a stabilizing mechanism (*e*.*g*., residual prediction module 340) for stabilizing the accuracy of predictions. The mechanism 340 includes a residual prediction model 345 in addition to a time series forecasting model 320. For the purposes of this disclosure, a residual value is the difference between a predicted value and an actual value.

To create a more robust system, residual learning is employed to stabilize the forecasting branches where local predictions could be improved. The predicted residual value 350 may be used to correct the local prediction 330.

Given a set of time series as input 310, a time series forecasting model 320 is built in a forecasting branch to produce a local prediction 330. The set of time series includes historical data, which is representative of conditions expected in the future. A residual prediction model 345 built in the training stage is used to predict residuals 350. A final local prediction 360 is calculated based on the local prediction 330 and the predicted residual value 350. Such a mechanism with residual learning is generic and can be integrated with any forecasting branch. In the example embodiments described herein, three forecasting branches are considered and will be discussed in detail below.

### Multi-step Time Series Forecasting Using A Regression Model With Residual Analysis

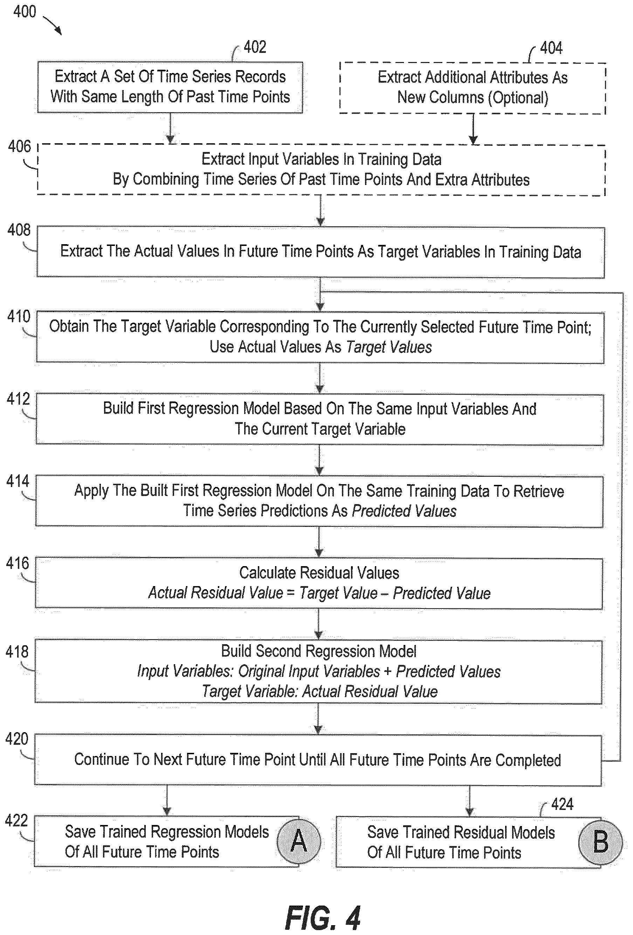

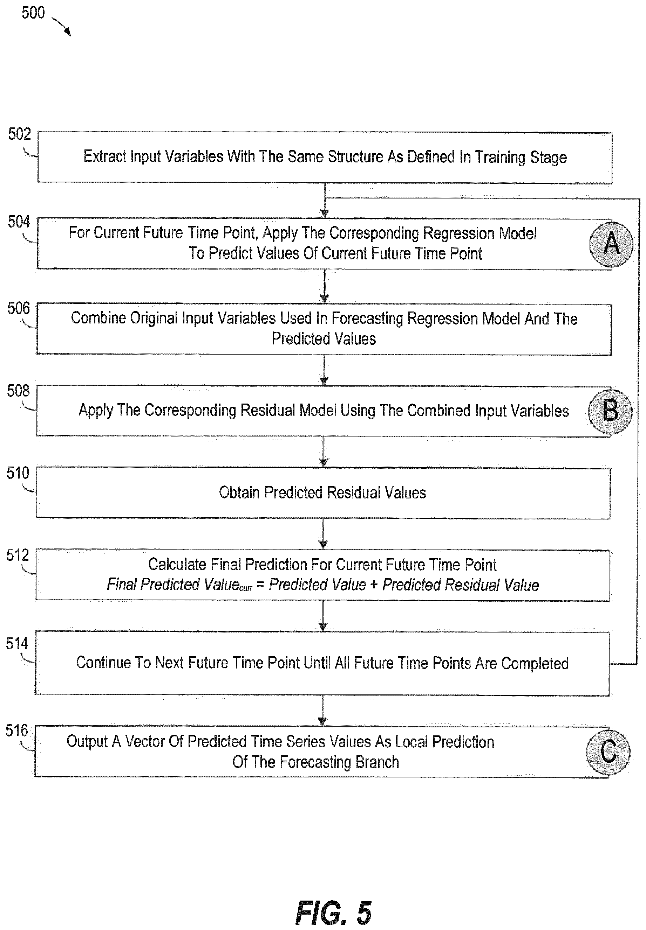

FIGS. 4 and 5 are flow diagrams of a use case according to some embodiments. More specifically, FIGS. 4 and 5 together illustrate an example embodiment implementing a regression model (with residual analysis) in a forecasting branch, with FIG. 4 illustrating a method for training the regression model and FIG. 5 illustrating a method for applying the regression model.

Initially, training data is gathered at 402 and 404. At 402, a set of time series records of past time points is extracted, all of them having the same length (*e*.*g*., number of data values). The time series includes values of past time points, used as input data, and values of future time series, used as target values. In some embodiments, a future time point may refer to a segment/period of time within a range of time in which the future time point falls (*e*.*g*., in hours, days, weeks, months, quarters, years, etc.), rather than a specific point in time.

In some embodiments, where extra information is available, the extra information may be included as additional input attributes extracted as new columns at 404. The time series of past time points 402 and additional attributes 404 are combined, at 406, to produce time series information. This pre-processing step involves combining/concatenating the data in two or more columns to form a single column of data.

After the time series information is gathered, actual values of future time points are extracted as target variables in training data at 408.

An iterative process begins at 410 with a currently selected future time point (*e*.*g*., the future time point being worked on). The target variable corresponding to the currently selected future time point is obtained at 410. The target variable value may be determined from actual values (*e*.*g*., actual historical values). In this case, the actual values taken on by the current future time point are referred to as target values.

Next, at 412, a first regression model is built based on the same input variables from 402, 404 and the current target variable. For each future time point, an individual regression model is built at 412 where the time series of past time points along with any additional attributes are used as input variables and the actual value corresponding to current future time point are used as the target variable.

Once the first regression model (*e*.*g*., forecasting regression model) is built for the current future time point, a stabilizing mechanism is used to improve accuracy. More specifically, the first regression model from 412 is applied to the training data at 414 to obtain predicted values of the current future time point. Residual values are then calculated at 416 by subtracting the predicted values from the actual/target values.

A second regression model (*e*.*g*., residual regression model) is then built at 418, using the original input variables from 402, 404 and the predicted time series values from 414 as input variables and the actual residual value from 416 as a new target variable. The same training process is repeated on all future time points iteratively from 410 through 420. Thus, if there are M future time points to predict, M regression models are built with the same input variables but with different target variables. For example, process 410 through 420 is repeated M times for M future time points, continuing from one currently selected future time point to a next (currently selected) future time point until a last (currently selected) future time point.

Two regression models 422 and 424 are trained as output of the first forecasting branch: a set of forecasting regression models (labeled "A") and their corresponding residual regression models (labeled "B"). The saved trained regression models of all future time points 422 generate a local prediction and the saved trained residual models of all future time points 424 generate a residual prediction (*e*.*g*., a correcting value) which, when combined, form a final local prediction.

When applying the first forecasting branch on new time series information, the trained forecasting regression models A, with their corresponding residual regression models B are applied.

As shown in FIG. 5, the same prediction process described with respect to FIG. 4 is performed iteratively on all future time points. At 502, input variables with the same structure as defined in the training stage in FIG. 4 are extracted. For a current future time point, regression model A is first applied at 504 to predict the time series values of the current future time point. The original input variables used in the forecasting regression model and the predicted values are combined at 506.

Next, at 508, based on the predicted values, residual regression model B is applied, where the residual value (*e*.*g*., predicted error) is predicted and obtained at 510. The final predicted value (*e*.*g*., actual final prediction) is calculated at 512 by adding the predicted residual value to the predicted time series value. Process 504 through 514 is repeated M times for M future time points, continuing from one currently selected future time point to a next (currently selected) future time point until a last (currently selected) future time point.

The output at 516 of the multi-step time series forecasting is represented by a vector or list of final predicted values of all future time points. In some embodiments, such a vector or list of predicted values is the output of the first forecasting branch, which is regarded as a local prediction, labeled "C".

### Multi-step Time Series Forecasting Using A Time Series Forecasting Model With Residual Analysis

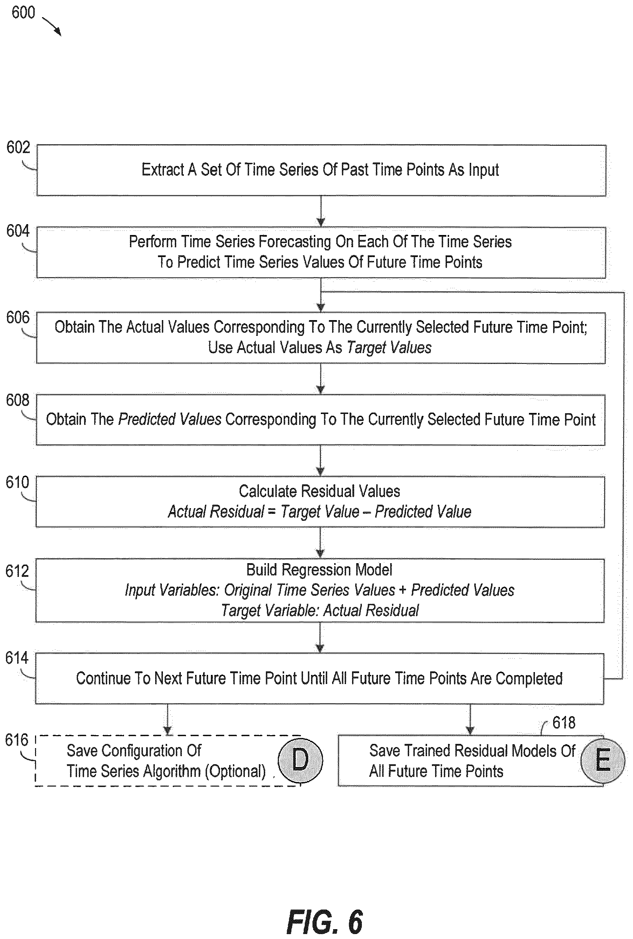

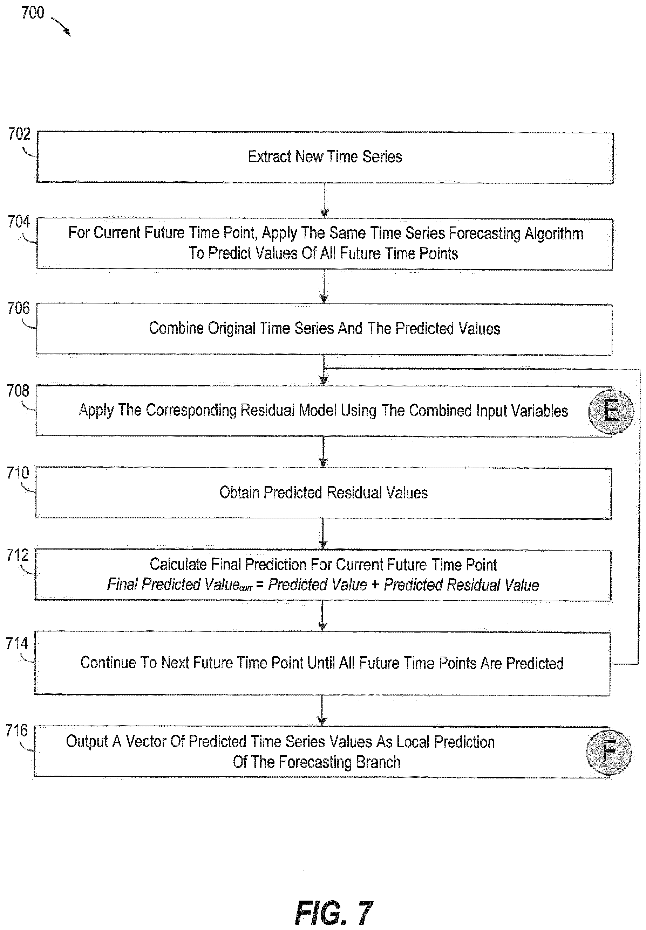

FIGS. 6 and 7 are flow diagrams of a use case according to some embodiments. More specifically, FIGS. 6 and 7 together illustrate an example embodiment implementing a time series forecasting model (with residual analysis) in a forecasting branch, with FIG. 6 illustrating a method for training the time series forecasting model and FIG. 7 illustrating a method for applying the time series forecasting model.

Initially, training data is gathered at 602, by extracting a set of time series records of past time points as input. A time series algorithm is repeatedly performed on each of the time series in the training set at 604 to predict time series values of future time points. This means when there are N time series in the dataset, there will be N time series models built, each of which will predict the time series values of next M future time points individually. The N time series models are independent from each other, which means in some embodiments different configurations of parameter values may be specified. In this example embodiment, the same pre-defined configuration of parameter values are used to build all the time series models, and as described below, a stabilizing mechanism may be performed to improve accuracy of the single time series forecasting algorithm in this case. Predictions of future time points are obtained as output from 604.

An iterative process begins at 606 with a currently selected future time point *(e.g.,* the future time point being worked on). The actual values (used as target values) and the predicted values corresponding to the currently selected future time point are obtained respectively at 606 and 608. In some embodiments, a future time point may refer to a segment/period of time within a range of time in which the future time point falls *(e.g.,* in hours, days, weeks, months, quarters, years, etc.).

Next, similar to FIG. 4, a stabilizing mechanism is performed to improve accuracy. Residual values are calculated at 610 by subtracting the predicted values the from the actual/target values. A residual regression model is built at 612 using the original time series values from 602 and the predicted time series values from 604 as input variables and the actual residual values from 606 as the target variable.

The same training process is repeated on all future time points iteratively from 606 through 614. For example, process 606 through 614 is repeated M times for M future time points, continuing from one currently selected future time point to a next (currently selected) future time point until a last (currently selected) future time point.

At 618, a set of residual regression models (labeled "E") are trained as output of the second forecasting branch. Additionally, in some embodiments, the configuration of the time series algorithm (labeled "D") may be saved at 616.

When applying the second forecasting branch on new time series information, the same time series forecasting algorithm from 604 (labeled "D") is performed and the trained residual regression models E are applied.

As shown in FIG. 7, the same prediction process described with respect to FIG. 6 is performed iteratively on all future time points. At 702 new time series information is extracted. For a current future time point, the same time series forecasting algorithm is first performed at 704 to predict time series values of required future time points. The original time series and the predicted values are combined at 706. For each future time point, the trained residual regression model E is applied at 708 to predict a residual value which is obtained at 710.

The final predicted value of each future time point is calculated at 712 by adding the corresponding predicted residual value to the corresponding predicted time series value.

Process 708-714 is repeated M times for M future time points, continuing from one currently selected future time point to a next (currently selected) future time point until a last (currently selected) future time point.

The output at 716 of the multi-step time series forecasting is represented by a vector or list of final predicted values of all future time points. In some embodiments, such a vector or list of predicted values is the output of the second forecasting branch, which is regarded as a local prediction, labeled "F".

### Multi-step Time Series Forecasting Using A Stacked Regression Model With Residual Analysis

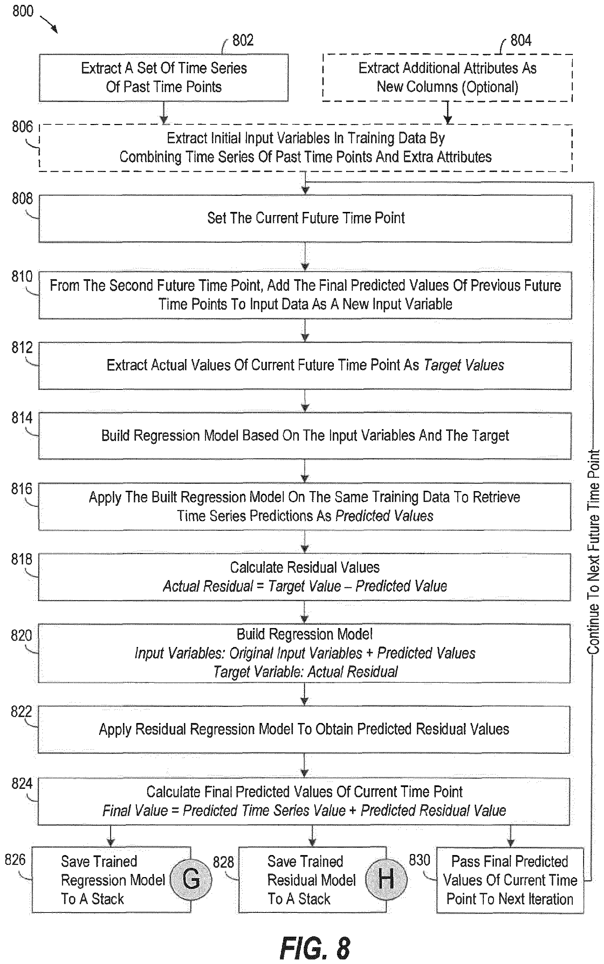

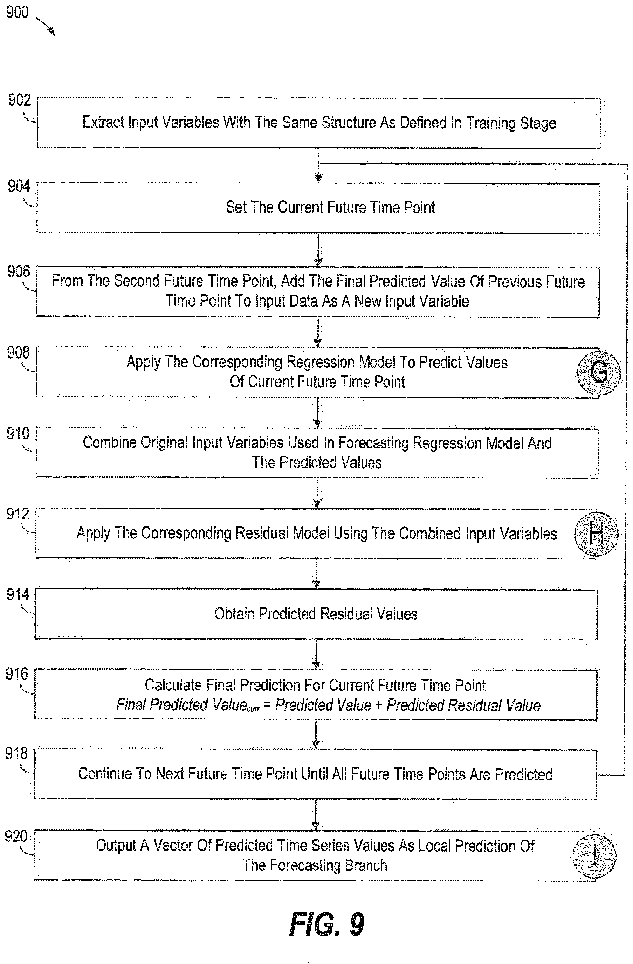

FIGS. 8 and 9 are flow diagrams of a use case according to some embodiments. More specifically, FIGS. 8 and 9 together illustrate an example embodiment implementing a stacked regression model (with residual analysis) in a forecasting branch, with FIG. 8 illustrating a method for training the stacked regression model and FIG. 9 illustrating a method for applying the stacked regression model.

Under the stacked regression model, a first future time point is used to predict a following future time point. Therefore, the prediction for a current future time point is based on all predicted values of the previous future time points (*e*.*g*., in a rolling manner). Each regression model is based on those regression models that have been built previously. Apart from the time series of past time points and the additional attributes used as input data, the predicted values of all future time points before the current future time point are used as additional input variables.

Initially, training data is gathered at 802 and 804. At 802, a set of time series records of past time points is extracted, all of them having the same length (*e*.*g*., number of data values). The time series includes values of past time points, used as input data, and values of future time series, used as target values. In some embodiments, a future time point may refer to a segment/period of time within a range of time in which the future time point falls *(e.g.,* in hours, days, weeks, months, quarters, years, etc.), rather than a specific point in time.

In some embodiments, where extra information is available, the extra information may be included as additional input attributes extracted as new columns at 804. The time series of past time points 802 and additional attributes 804 are combined, at 806, to produce time series information.

An iterative process begins at 808 with a current future time point *(e.g.,* the future time point being worked on). At 808, the current future time point is set (*e*.*g*., based on the number of desired predictions). At a first future time point, step 810 is skipped. Actual values corresponding to the current future time point are extracted as target values in training data at 812. Next, at 814, a first regression model is built based on the input variables from 802, 804 and the current target variable.

Once the first regression model (*e*.*g*., forecasting regression model) is built for the current future time point, a stabilizing mechanism is performed at 816 where the built regression model is applied on the same training data to retrieve time series predictions as predicted values. More specifically, the first regression model from 814 is applied to the training data at 816 to obtain predicted values of the current future time point. Residual values are then calculated at 818 by subtracting the predicted values from the actual/target values.

A second regression model (*e*.*g*., residual regression model) is then built at 820, using the original input variables from 802, 804 and the predicted time series values from 816 as input variables and the actual residual value from 818 as a new target variable. At 822, the residual regression model is applied to obtain predicted residual values. The final predicted value (*e*.*g*., actual final prediction) is calculated at 824 by adding the predicted residual value to the predicted time series value.

The final predicted values of the current time point from 830 are passed to the next iteration for a next future time point. The same training process is repeated on all future time points iteratively from 808 through 830, continuing from one currently selected future time point to a next (currently selected) future time point until a last (currently selected) future time point.

Two regression models 826 and 828 are trained as output of the third forecasting branch: a set of forecasting regression models (labeled "G") and their corresponding residual regression models (labeled "H"). The saved trained regression models of all future time points 826 generate a local prediction and the saved trained residual models of all future time points 828 generate a residual prediction (*e*.*g*., a correcting value) which, when combined, form a final local prediction.

In this way, the third forecasting branch is performed in a rolling manner where a sequence of regression models with residual models are trained, each regression model based on the previously trained regression models.

When applying the third forecasting branch on new time series, the trained forecasting regression models with their corresponding residual regression models are applied following the same sequence.

As shown in FIG. 9, at 902, input variables with the same structure as defined in the training stage in FIG. 8 are extracted. The current future time point is set at 904 (*e*.*g*., based on the number of desired predictions). From the second future time point, at 906, the predicted values of future time points before the current one are combined into the input data.

For a current future time point, the first regression model G (*e*.*g*., forecasting regression model) is first applied at 908 to predict the time series values of the current future time point. The original input variables used in the forecasting regression model and the predicted values are combined at 910.

Next, at 912, based on the predicted values, the second regression model H (*e*.*g*., residual regression model) is applied, where the residual value (*e*.*g*.,.predicted error) is predicted and obtained at 914. The final predicted value (*e*.*g*., actual final prediction) is calculated at 916 by adding the predicted residual value to the predicted time series value. The final predicted value is saved for current future time point. At the same time, the final prediction is passed to next iteration at 918 when moving to next future time point.

Process 908-918 is repeated M times for M future time points, continuing from one currently selected future time point to a next (currently selected) future time point until a last (currently selected) future time point.

The output at 920 of the multi-step time series forecasting is represented by a vector or list of final predicted values of all future time points. In some embodiments, such a vector or list of predicted values is the output of the third forecasting branch, which is regarded as a local prediction, labeled "I".

### Combining Multiple Forecasting Branches

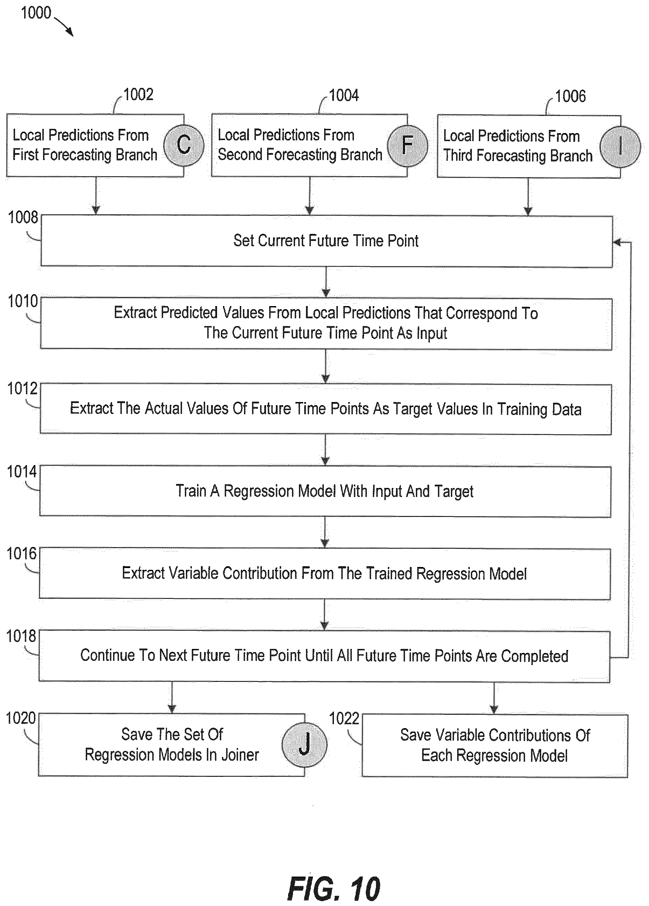

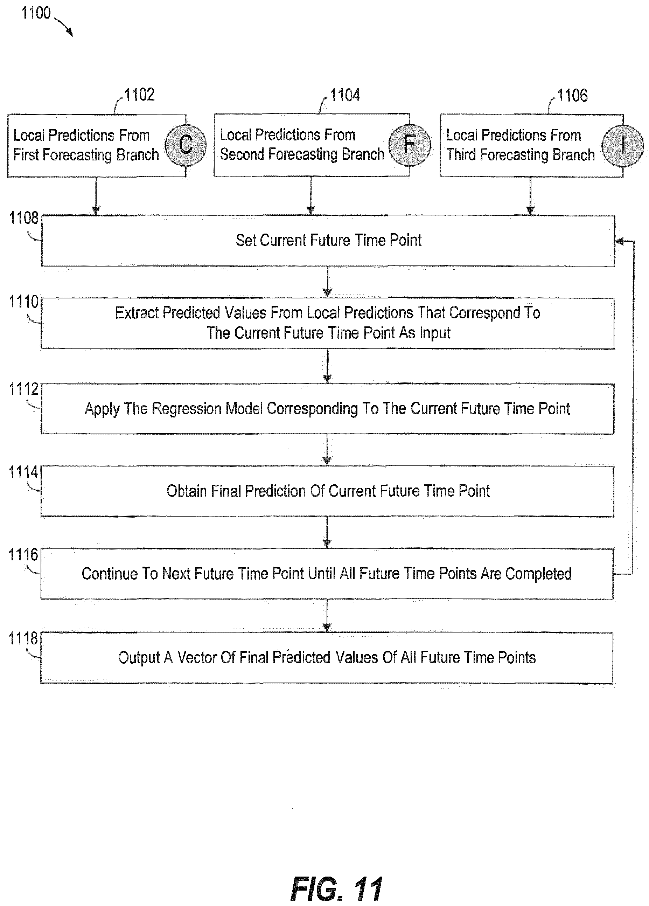

FIGS. 10 and 11 are flow diagrams of a use case according to some embodiments. More specifically, FIGS. 10 and 11 together illustrate an example embodiment implementing a joiner in combining a set of local predictions from multiple forecasting branches to produce a final prediction, with FIG. 10 illustrating a method for training the joiner and FIG. 11 illustrating a method for applying the joiner.

The joiner combines the local predictions to determine the final prediction. Advantageously, the joiner is capable of performing the combination regardless of time series algorithms used in different forecasting branches. Also, the joiner is capable of automatically identifying the optimal contributions of different forecasting branches in terms of their performance regardless of datasets and applications.

As shown in FIG. 10, when the three forecasting branches described above are performed, a set of local predictions are obtained at 1002, 1004, and 1006. The final prediction is determined based on the local predictions. In the example embodiments described herein, the final prediction is determined based the local predictions from the first forecasting branch labeled "C" *(e.g.,* FIG. 5), the local predictions from the second forecasting branch labeled "F" (*e*.*g*., FIG. 7), and the local predictions from the third forecasting branch labeled "I" *(e.g.,* FIG. 9),

In FIG. 10, a set of regression models is built iteratively in the joiner at 1008-1018, each of which corresponds to one future time point in sequence. Given the current future time point 1008, a regression model is trained at 1014 where the local predicted values corresponding to the current time point extracted at 1010 is used as input and the actual values of current time point extracted at 1012 are used as target.

When the regression model is trained, contributions of the input variables are extracted at 1016. Since each input variable in regression model corresponds to the local prediction of one forecasting branch, a higher contribution value of one variable means that the corresponding forecasting branch has better performance and thus contributes more in producing the final prediction. Advantageously, the contributions of different forecasting branches are determined solely based on the performance of forecasting branches and no other prior knowledge is required.

Moreover, having only the local predictions as input variables, the regression model in the joiner stage is decoupled from the original data that the local predictions where produced from. This enables the regression model to successfully determine the contributions of different forecasting branches without any prior knowledge of the underlying data from which they were produced. Thus, with such an automatic mechanism, the joiner can combine the local predictions in a self-adaptive way, making it feasible to flexibly include or exclude different forecasting branches.

Given new time series, the joiner is applied as shown in FIG. 11. The time series are first processed through the three forecasting branches, where local predictions are obtained at 1102, 1104 and 1106. The joiner is performed by applying each regression model in sequence on each future time point from 1108-1116. The regression model corresponding to the current future time point is applied at 1112 where the local predicted values corresponding to current time point extracted at 1110 is used as input.

The output at 1118 of the multi-step time series forecasting is represented by a vector or list of final predicted values of all future time points.

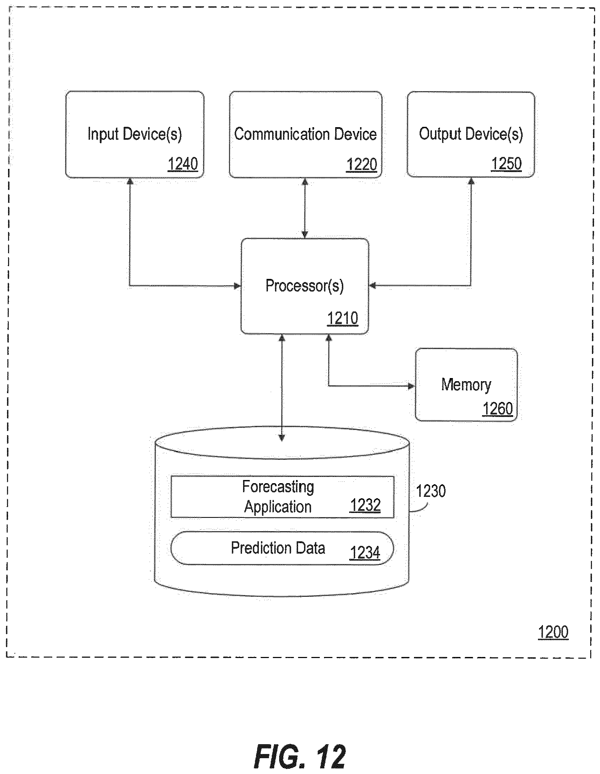

FIG. 12 is a block diagram of an apparatus 1200 according to some embodiments. Apparatus 1200 may comprise a general- or special-purpose computing apparatus and may execute program code to perform any of the functions described herein. Apparatus 1200 may comprise an implementation of one or more elements of system 100, such as application server 110. Apparatus 1200 may include other unshown elements according to some embodiments.

Apparatus 1200 includes processor 1210 operatively coupled to communication device 1220, data storage device 1230, one or more input devices 1240, one or more output devices 1250, and memory 1260. Communication device 1220 may facilitate communication with external devices, such as an application server 110. Input device(s) 1240 may comprise, for example, a keyboard, a keypad, a mouse or other pointing device, a microphone, knob or a switch, an infra-red (IR) port, a docking station, and/or a touch screen. Input device(s) 1240 may be used, for example, to manipulate graphical user interfaces and to input information into apparatus 1200. Output device(s) 1250 may comprise, for example, a display (*e*.*g*., a display screen), a speaker, and/or a printer.

Data storage device 1230 may comprise any appropriate persistent storage device, including combinations of magnetic storage devices (*e*.*g*., magnetic tape, hard disk drives and flash memory), optical storage devices, Read Only Memory (ROM) devices, etc., while memory 1260 may comprise Random Access Memory (RAM).

Forecasting application 1232 may comprise program code executed by processor 1210 to cause apparatus 1200 to perform any one or more of the processes described herein. Embodiments are not limited to execution of these processes by a single apparatus.

Prediction data 1234 may store values associated with forecasting models/branches as described herein, in any format that is or becomes known. Prediction data 1234 may also alternatively be stored in memory 1260. Data storage device 1230 may also store data and other program code for providing additional functionality and/or which are necessary for operation of apparatus 1200, such as device drivers, operating system files, etc.

The foregoing diagrams represent logical architectures for describing processes according to some embodiments, and actual implementations may include more or different components arranged in other manners. Other topologies may be used in conjunction with other embodiments. Moreover, each component or device described herein may be implemented by any number of devices in communication via any number of other public and/or private networks. Two or more of such computing devices may be located remote from one another and may communicate with one another via any known manner of network(s) and/or a dedicated connection. Each component or device may comprise any number of hardware and/or software elements suitable to provide the functions described herein as well as any other functions. For example, any computing device used in an implementation of a system according to some embodiments may include a processor to execute program code such that the computing device operates as described herein.

All systems and processes discussed herein may be embodied in program code stored on one or more non-transitory computer-readable media. Such media may include, for example, a floppy disk, a CD-ROM, a DVD-ROM, a Flash drive, magnetic tape, and solid state Random Access Memory (RAM) or Read Only Memory (ROM) storage units. Embodiments are therefore not limited to any specific combination of hardware and software.

Embodiments described herein are solely for the purpose of illustration. Those in the art will recognize other embodiments may be practiced with modifications and alterations to that described above.

The following items are useful for understanding the invention:
1. A computer-implemented method comprising:
   receiving training data including sequential data;
   determining a plurality of future time points;
   generating a first prediction by applying a first forecasting algorithm to the training data;
   generating a second prediction by applying a second forecasting algorithm to the training data;
   extracting predicted values from the first prediction and the second prediction that corresponds to a future time point of the plurality of future time points;
   applying a regression model in sequence on each of the plurality of future time points to generate a final predicted value of each of the plurality of future time points; and
   outputting the final predicted values of the plurality of future time points.
2. The method of item 1, further comprising generating one or more additional predictions by applying one or more additional forecasting algorithms to the training data.
3. The method of item 1, wherein the first forecasting algorithm and the second forecasting algorithm are based on at least one of: a regression model with residual analysis, a time series forecasting model with residual analysis, and a stacked regression model with residual analysis.
4. The method of item 1, wherein the first forecasting algorithm and the second forecasting algorithm are different forecasting algorithms.
5. The method of Item 1, further comprising adding, changing, or removing of one or more forecasting algorithms prior to outputting the final predicted values.
6. A computer-implemented method comprising:
   receiving input information, the input information comprising at least one time series of actual values of historical data;
   using a time series forecasting model to generate a first local prediction based on the input information, the first local prediction comprising predicted values;
   using a residual prediction model to generate a predicted error, wherein the predicted error is a difference between the predicted values of the first local prediction and the actual values from the historical data; and
   generating a second local prediction based on the predicted values and the predicted error.
7. The method of item 6, further comprising:
   receiving additional attributes,
   wherein the input information comprises the at least one time series and the additional attributes.
8. The method of item 6, wherein the first local prediction and the second local prediction include predicted values corresponding to a time point in the future defined in: hours, days, weeks, months, quarters, or years.
9. A system comprising:
   a processor; and
   a memory in communication with the processor, the memory storing program instructions,
   the processor operative with the program instructions to perform the operations of:
      receiving training data including sequential data;
      generating first prediction information by applying a first forecasting algorithm to the training data;
      generating second prediction information by applying a second forecasting algorithm to the training data;
      identifying optimal contributions from different forecasting algorithms including the first forecasting algorithm and the second forecasting algorithm, using a regression model, based on which of the different forecasting algorithms produces more accurate prediction information; and
      outputting final prediction information based on the optimal contributions from the different forecasting algorithms.
10. The system of item 9, further comprising generating additional prediction information by applying additional forecasting algorithms to the training data.
11. The system of item 9, wherein the first forecasting algorithm and the second forecasting algorithm are based on at least one of: a regression model with residual analysis, a time series forecasting model with residual analysis, and a stacked regression model with residual analysis.
12. The system of item 9, wherein the first forecasting algorithm and the second forecasting algorithm are different forecasting algorithms.
13. The system of item 9, further comprising adding, changing, or removing of one or more forecasting algorithms prior to outputting the final prediction information.
14. A system comprising:
   a processor; and
   a memory in communication with the processor, the memory storing program instructions,
   the processor operative with the program instructions to perform the operations of:
      receiving input information, the input information comprising a set of time series records comprising known values;
      using a time series forecasting model to generate an initial prediction based on the input information;
      using a residual prediction model to generate a residual prediction, wherein the residual prediction is based on the initial prediction and the known values from the set of time series records; and
      generating a final prediction based on the initial prediction and the residual prediction.
15. The system of item 14, further comprising:
   receiving additional attributes,
   wherein the input information comprises the set of time series records and the additional attributes.
16. The system of item 14, wherein the initial prediction and the final prediction include predicted values corresponding to a time point in the future defined in: hours, days, weeks, months, quarters, or years.
17. A non-transitory computer readable medium having stored therein instructions that when executed cause a computer to perform a method comprising:
   receiving training data including sequential data;
   determining a plurality of future time points;
   generating a first prediction by applying a first forecasting algorithm including residual analysis to the training data;
   generating a second prediction by applying a second forecasting algorithm including residual analysis to the training data;
   extracting predicted values from the first prediction and the second prediction that corresponds to a future time point of the plurality of future time points;
   applying a regression model in sequence on each of the plurality of future time points to generate a final predicted value of each of the plurality of future time points; and
   outputting the final predicted values of the plurality of future time points.
18. The non-transitory computer-readable medium of item 17, further comprising generating one or more additional predictions by applying one or more additional forecasting algorithms to the training data.
19. The non-transitory computer-readable medium of item 17, wherein the first forecasting algorithm and the second forecasting algorithm are based on at least one of: a regression model, a time series forecasting model, and a stacked regression model.
20. The non-transitory computer-readable medium of item 17, further comprising adding, changing, or removing of one or more forecasting algorithms prior to outputting the final predicted values.

## Claims

1. A computer-implemented method comprising:
receiving training data including sequential data;
determining a plurality of future time points;
generating a first prediction by applying a first forecasting algorithm to the training data;
generating a second prediction by applying a second forecasting algorithm to the training data;
extracting predicted values from the first prediction and the second prediction that corresponds to a future time point of the plurality of future time points;
applying a regression model in sequence on each of the plurality of future time points to generate a final predicted value of each of the plurality of future time points; and
outputting the final predicted values of the plurality of future time points.

2. The method of claim 1, further comprising generating one or more additional predictions by applying one or more additional forecasting algorithms to the training data.

3. The method of claim 1 or 2, wherein the first forecasting algorithm and the second forecasting algorithm are based on at least one of: a regression model with residual analysis, a time series forecasting model with residual analysis, and a stacked regression model with residual analysis; and/or
wherein the first forecasting algorithm and the second forecasting algorithm are different forecasting algorithms.

4. The method of any one of claims 1 to 3, further comprising adding, changing, or removing of one or more forecasting algorithms prior to outputting the final predicted values.

5. A computer-implemented method comprising:
receiving input information, the input information comprising at least one time series of actual values of historical data;
using a time series forecasting model to generate a first local prediction based on the input information, the first local prediction comprising predicted values;
using a residual prediction model to generate a predicted error, wherein the predicted error is a difference between the predicted values of the first local prediction and the actual values from the historical data; and
generating a second local prediction based on the predicted values and the predicted error.

6. The method of claim 5, further comprising:
receiving additional attributes,
wherein the input information comprises the at least one time series and the additional attributes.

7. The method of claim 5 or 6, wherein the first local prediction and the second local prediction include predicted values corresponding to a time point in the future defined in: hours, days, weeks, months, quarters, or years.

8. A system comprising:
a processor; and
a memory in communication with the processor, the memory storing program instructions, the processor operative with the program instructions to perform the operations of:
receiving training data including sequential data;
generating first prediction information by applying a first forecasting algorithm to the training data;
generating second prediction information by applying a second forecasting algorithm to the training data;
identifying optimal contributions from different forecasting algorithms including the first forecasting algorithm and the second forecasting algorithm, using a regression model, based on which of the different forecasting algorithms produces more accurate prediction information; and
outputting final prediction information based on the optimal contributions from the different forecasting algorithms.

9. The system of claim 8, further comprising generating additional prediction information by applying additional forecasting algorithms to the training data.

10. The system of claim 8 or 9, wherein the first forecasting algorithm and the second forecasting algorithm are based on at least one of: a regression model with residual analysis, a time series forecasting model with residual analysis, and a stacked regression model with residual analysis; and/or
wherein the first forecasting algorithm and the second forecasting algorithm are different forecasting algorithms.

11. The system of any one of claims 8 to 10, further comprising adding, changing, or removing of one or more forecasting algorithms prior to outputting the final prediction information.

12. A system comprising:
a processor; and
a memory in communication with the processor, the memory storing program instructions, the processor operative with the program instructions to perform the operations of:
receiving input information, the input information comprising a set of time series records comprising known values;
using a time series forecasting model to generate an initial prediction based on the input information;
using a residual prediction model to generate a residual prediction, wherein the residual prediction is based on the initial prediction and the known values from the set of time series records; and
generating a final prediction based on the initial prediction and the residual prediction.

13. The system of claim 12, further comprising:
receiving additional attributes,
wherein the input information comprises the set of time series records and the additional attributes.

14. The system of claim 12 or 13, wherein the initial prediction and the final prediction include predicted values corresponding to a time point in the future defined in: hours, days, weeks, months, quarters, or years.

15. A non-transitory computer readable medium having stored therein instructions that when executed cause a computer to perform a method according to any one of claims 1 to 7.
